# EUROPÄISCHE PATENTSCHRIFT

(11) **EP 2 293 040 B1**
(45) Veröffentlichungstag und Bekanntmachung des Hinweises auf die Patenterteilung: **21.03.2012**
(21) Anmeldenummer: 10193031.1
(22) Anmeldetag: 11.10.2006
(51) Int. Cl.: G01N 3/00, G01N 3/32

(54) **Verfahren und Vorrichtung zur Prüfung eines Probekörpers unter kombinierter Umlaufbiege- und Torsionsbeanspruchung**
Method and device for checking a sample body by combined rotational bending and torsion loading
Procédé et dispositif de test d'une éprouvette soumise à un effort de flexion rotative et de torsion combiné

(30) Priorität: 14.10.2005 AT 16852005
(43) Veröffentlichungstag der Anmeldung: 09.03.2011
(62) Teilanmeldung aus: 06792417.5
(73) Patentinhaber: Montanuniversität Leoben, 8700 Leoben (AT)
(72) Erfinder: Fröschl, Jürgen, 4320 Perg (AT); Eichlseder, Wilfried, 8700 Leoben (AT)
(74) Vertreter: Dilg, Haeusler, Schindelmann Patentanwaltsgesellschaft mbH

(56) Entgegenhaltungen:
- DE-C- 904 479
- FR-A1- 2 411 403
- JP-A- 50 142 279
- JP-A- 60 107 545
- JP-U- 62 168 447
- DATABASE WPI Week 198805 Thomson Scientific, London, GB; AN 1988-035474 XP002616669, -& SU 1 320 706 A (KOZLOV K L) 30. Juni 1987 (1987-06-30)

## Beschreibung

Die Erfindung betrifft ein Verfahren und eine Vorrichtung zur Prüfung eines Probekörpers unter kombinierter Umlaufbiege- und Torsionsbeanspruchung, vorzugsweise mit hoher Frequenz einer oder beider Beanspruchungen.

Um für Maschinenteile eine möglichst praxisgerechte Dimensionierung zu ermöglichen, ist es notwendig, neben herkömmlichen Werkstoffprüfungen unter quasistatischer Zugbeanspruchung auch Versuche unter zyklischer Beanspruchung durchzuführen, zum Beispiel Versuche unter einachsiger zyklischer Zug- bzw. Biegebeanspruchung. Die Forschungen auf dem Gebiet der Werkstoffermüdung unter mehrachsiger Beanspruchung werden üblicherweise unter kombinierter Zug-/Torsionsbeanspruchung durchgeführt. An einigen Forschungseinrichtungen wurden zusätzlich Prüfmaschinen für kombinierte Axialbiege-/Torsionsbeanspruchung gebaut. Beide Prüfmethoden haben jedoch den Nachteil, dass bei einer Änderung des Frequenzverhältnisses zwischen den beiden Beanspruchungen sich die Anzahl der höchstbeanspruchten Stellen im Prüfquerschnitt der Werkstoffprobe nicht ändert. Somit lassen sich einige für die Bestimmung des Ermüdungsverhaltens wichtige Aussagen nicht treffen.

Es sind daher Überlegungen angestellt worden, noch zusätzliche Informationen über einen Werkstoff zu erhalten, die für die Beschreibung des Ermüdungsverhaltens des Werkstoffes wesentlich sind. Hierbei hat sich eine kombinierte Umlaufbiege-Torsionsbeanspruchung als zweckmäßig erwiesen, zumal dabei mehrere höchst beanspruchte Stellen im Prüfquerschnitt je nach gewähltem Frequenzverhältnis auftreten.

Zur Durchführung einer kombinierten Umlaufbiege-Torsionsbeanspruchung eines Probekörpers ist es bekannt, eine servohydraulische Prüfeinrichtung einzusetzen, die eine Prüfung unter einer solchen Beanspruchungskombination ermöglicht. Bei dieser Prüfeinrichtung handelt es sich um eine Entwicklung des Laboratoire Matériaux Endommagement Fiabilité, Bordeaux, France. Eine solche servohydraulische Prüfeinrichtung erlaubt jedoch nur sehr geringe Prüffrequenzen, zudem ist eine solche Prüfung mit einem hohen Energiebedarf verbunden.

DE 37 16 215 A1 offenbart eine Umlaufbiegeprüfmaschine mit Torsionsbelastungseinrichtung zum Einleiten eines umlaufenden Biegemoments und einer Torsionsbelastung in einen Prüfling.

JP 2004150976 A offenbart ein Lasttestgerät für ein Torsionsbiegen und eine Achslast.

JP 200227392 A offenbart eine kombinierte Torsions-Biege-Belastungstestmaschine.

JP 7260652 A offenbart einen Statikbelastungstester.

JP 61014541 A offenbart eine Torsions- und Biege-Testmaschine.

Aus der JP 4232441 ist es an sich bekannt, zur Erzeugung einer Torsionsschwingung eine Probe an ihren beiden Enden mittels Elektromotoren in Rotation zu bringen und die Drehwinkel der Motoren über Funktionsgeber zu detektieren. Geräte dieser Art, bei denen die beiden an jeweils einem Ende der Probe angekoppelten Elektromotoren mit unterschiedlicher Drehzahl betrieben werden, sind vor allem für das Prüfen von Drähten geeignet.

Aus der EP 0 410 370 B1 ist eine Vorrichtung bekannt, bei der eine Probe an jeweils einem Ende mittels eines Elektromotors in Drehung versetzbar ist, wobei die Drehbewegung eines Elektromotors, der mit einem Ende der Probe gekoppelt ist, mittels einer Blockiervorrichtung blockiert und plötzlich wieder freigegeben werden kann.

Ein Verfahren zur Prüfung einer Probe unter Kombinierter Biege-und Torsionsbeanspruchung ist aus der FR-A-2411403 bekannt. Darin wird die Probe in Rotation gebracht und einer Torsionsbeanspruchung durch an zwei Bereichen der Probe aufgebrachte torsionsmomente sowie einer Biegebanspruchung ausgesetzt.

Der Erfindung liegt die Aufgabe zugrunde, ein Verfahren sowie eine Vorrichtung zu schaffen, welche eine Prüfung eines Probekörpers unter kombinierter Umlaufbiege- und Torsionsbeanspruchung ermöglichen, wobei ein Prüfergebnis in kurzer Zeit erhalten werden kann, und zwar bei möglichst geringem Energiebedarf.

Diese Aufgabe wird durch die Gegenstände gemäß den unabhängigen Patentansprüchen gelöst.

Indem die beiden Endbereiche der Probe durch zwei Elektromotoren gegeneinander verdreht werden, entsteht ein konstantes Torsionsmoment über die Probenlänge. Die beiden Elektromotoren können dermaßen geregelt werden, dass sowohl ein zyklisches als auch ein überlagertes statisches Torsionsmoment auf die Probe aufgebracht werden kann. Einer der beiden Elektromotoren kann zusätzlich die Probe in eine gleichmäßige Rotation mit vorwählbarer Drehzahl versetzen.

Eine sehr effiziente Energieeinsparung lässt sich gemäß einem exemplarischen Ausführungsbeispiel der Erfindung dann erzielen, wenn die elektrischen Kreisläufe der beiden Elektromotoren gekoppelt sind, wobei Energie für den antreibenden Elektromotor vom gerade im Bremsbetrieb befindlichen Motor geliefert werden kann.

Mit besonders geringem Aufwand lässt sich die Biegebeanspruchung der Probe gemäß einem exemplarischen Ausführungsbeispiel der Erfindung verwirklichen, indem die Krafteinleitung über den Stator jedes Elektromotors erfolgt, wobei die Biegebeanspruchung über die Probelänge in konstanter Größe erfolgt.

Untersuchungen zur Ermittlung von volumetrischen Einflüssen auf die Festigkeitseigenschaften sind gemäß einem exemplarischen Ausführungsbeispiel der Erfindung ermöglicht. Darüber hinaus bietet die kombinierte Umlaufbiege-Torsionsbeanspruchung den Vorteil einer Prüfung an Werkstoffproben unter bauteilnahen Beanspruchungsbedingungen.

Zusätzlich ermöglicht die Prüfvorrichtung gemäß einem exemplarischen Ausführungsbeispiel der Erfindung eine Schwingfestigkeitsprüfung unter reiner Torsionsschwingbeanspruchung sowie reiner Umlaufbiegewechselbeanspruchung.

Bei dem Verfahren kann die Probe unter kombinierter Umlaufbiege- und Torsionsbeanspruchung mit hoher Frequenz geprüft werden. Im Rahmen dieser Anmeldung kann unter einer "hohen Frequenz" eine Frequenz oberhalb von 15 Hz, insbesondere eine Frequenz von mindestens 30 Hz verstanden werden. Die Frequenz kann bis zu 60 Hz und mehr betragen, wohingegen bei konventionellen, servohydraulischen Systemen eine Obergrenze bei 15 Hz liegt.

Gemäß der Erfindung erfolgt das Aussetzen der Probe einer Torsionsbeanspruchung durch an zwei einander gegenüberliegenden Endbereichen der Probe aufgebrachte Torsionsmomente erfolgen.

Es ist vorteilhaft, dass der Kraftfluss im Wesentlichen probenmittig verläuft.

Bei einem Verfahren gemäß einem exemplarischen Ausführungsbeispiel der Erfindung kann die Biegebeanspruchung über zwei einander gegenüberliegende Endbereiche der Probe aufgebracht werden.

Bei einem Verfahren gemäß einem exemplarischen Ausführungsbeispiel der Erfindung kann ein Wechselverformungsverhalten der Probe erfasst werden. Zur Erfassung des Wechselverformungsverhaltens können vorzugsweise zwei Drehwinkelgeber der Elektromotoren zur Ermittlung der Schubverzerrungen im Prüfquerschnitt sowie eine Messeinrichtung zur Erfassung der lokalen Normaldehnungen in der Werkstoffprobe eingesetzt werden. Dies kann beispielsweise über eine Linearmesseinrichtung erfolgen. Dies kann es erlauben, zusätzliche Informationen zu erhalten, die zum Beispiel im Rahmen einer Materialmodellierung verwendet werden können.

Eine Vorrichtung gemäß einem exemplarischen Ausführungsbeispiel der Erfindung zur Durchführung des oben beschriebenen Verfahrens ist in Anspruch 6 definiert.

Vorzugsweise sind als Elektromotoren Servomotoren eingesetzt.

Zur genauen Detektierung der Torsionsbelastung ist gemäß einem exemplarischen Ausführungsbeispiel der Erfindung jeder Elektromotor mit einem Drehwinkelgeber ausgestattet und ist eine Drehmomentenmesseinrichtung zwischen den Elektromotoren vorgesehen, deren Messdaten einem Drehmomentenregler zuführbar sind.

Die Krafteinleitung für die Biegebeanspruchung des Probekörpers erfolgt gemäß einem exemplarischen Ausführungsbeispiel der Erfindung mittels eines Kraftgerätes, wie einer Hubspindel oder einem Druckmittelzylinder, welches Kraftgerät mit einem Träger gekoppelt ist, der beidseitig der Koppelung mit dem Kraftgerät über Hebel eines Hebelsystems mit jeweils einem Stator der Elektromotoren gekoppelt ist.

Vorzugsweise ist zur Einstellung unterschiedlicher Biegebeanspruchungen die Distanz der Anlenkungen der Hebel des Hebelsystems am Träger und/oder am Stator variabel.

Eine bevorzugte Ausführungsform ist dadurch gekennzeichnet, dass die Koppelung des Kraftgerätes mit dem Träger über ein elastisch nachgiebiges Element, vorzugsweise ausgebildet als Schraubenfeder, verwirklicht ist.

In dieser Patentanmeldung offenbarte Ausgestaltungen der Vorrichtung(en) gelten auch für das Verfahren, und umgekehrt.

Exemplarische Aspekte der Erfindung sind nachfolgend anhand eines in der Zeichnung schematisch dargestellten Ausführungsbeispiels näher erläutert, wobei Fig. 1 eine Gesamtansicht einer Vorrichtung zur Prüfung eines Probekörpers unter kombinierter Umlaufbiege- und Torsionsbeanspruchung gemäß einem exemplarischen Ausführungsbeispiel der Erfindung veranschaulicht. Die Fig. 2a bis 2c zeigen unterschiedliche Bruchflächen des Probekörpers für unterschiedlich eingestellte Frequenzverhältnisse. Die Fig. 3a und Fig. 3b zeigen jeweils Fotographien der Bruchfläche einer Probe in Stirnansicht und in Seitenansicht. Fig. 4 gibt einen Torsionsmomenten-Zeitverlauf in Diagrammform wieder.

Mit 1 ist eine Probe bezeichnet, die von einem zylindrischen Stab, z.B. mit einem Durchmesser im Bereich zwischen 5 und 10 mm, vorzugsweise 6 bis 7,5 mm, gebildet ist. Andere Prüfdurchmesser sind möglich. An jeweils einem Ende der Probe 1 ist eine Einspanneinrichtung 2 vorgesehen, mit der die Probe 1 an jeweils eine Antriebswelle 3 eines elektrischen Antriebsmotors 4 angeschlossen ist. Einer der Elektromotoren 4 ist mit einer Drehmomenten-Messdose 5 ausgestattet. Die Elektromotoren 4, die als Servomotoren ausgebildet sind, sind mit ihren Statoren um eine Schwenkachse 6 gegenüber einem Fundament 7 schwenkbeweglich gelagert, welche Schwenkachsen 6 sich quer zu den Antriebswellen 3 der Elektromotoren 4 und zueinander parallel erstrecken. Jeder Elektromotor 4 weist einen Drehwinkelgeber 8 auf und ist mit einem Servoumrichter 9 ausgestattet, über den zyklisch ein Torsionsmoment an jeden der beiden Elektromotoren 4 aufgebracht werden kann. Die Probe 1 erfährt hierdurch eine zyklische Torsionsmomentbeanspruchung mit möglicher Torsionsmittelmomentüberlagerung.

Die beiden Elektromotoren 4 sind elektrisch gekoppelt, was dazu führt, dass der gerade bremsende Elektromotor 4 einen Großteil der Energie für den treibenden Elektromotor liefert.

Zur Aufbringung einer Biegebelastung ist ein Kraftgerät 10, wie beispielsweise eine Hubspindel, vorgesehen, mit der ein Träger 11 etwa mittig seiner Längserstreckung belastbar ist. In den beiden Endbereichen 12 des Trägers 11 sind Hebel 13 eines Hebelsystems angelenkt, über die die von der Hubspindel 10 auf den Träger 11 übertragene Kraft in die Statoren der beiden Elektromotoren 4 übertragbar ist. Die Anlenkstellen der Hebel 13 des Hebelsystems am Träger 11 und/oder am jeweiligen Stator sind zur genauen Einstellung bestimmter Biegebeanspruchungen der Probe 1 variabel, so dass deren Entfernung von der Koppelung des Trägers 11 mit dem Kraftgerät 10 einstellbar ist.

Das Kraftgerät 10 ist mit dem Träger 11 über ein elastisches Zwischenglied 14, wie beispielsweise eine Spiralfeder, gekoppelt.

Mittels eines Regelgerätes 15 lassen sich sowohl die von dem Kraftgerät 10 auf den Träger 11 übertragene Kraft als auch die Drehmomentenamplitude und der Drehmomentmittelwert für die beiden Elektromotoren 4 variieren. An das Regelgerät 15 angeschlossen ist eine Computereinheit 16 mit Bildschirm zur Ergebnisdarstellung.

Kommt es zu einem Bruch der Probe 1, wird dies über einen Endschalter 17 registriert und es werden die Elektromotoren 4 und auch das Kraftgerät 10 abgeschaltet.

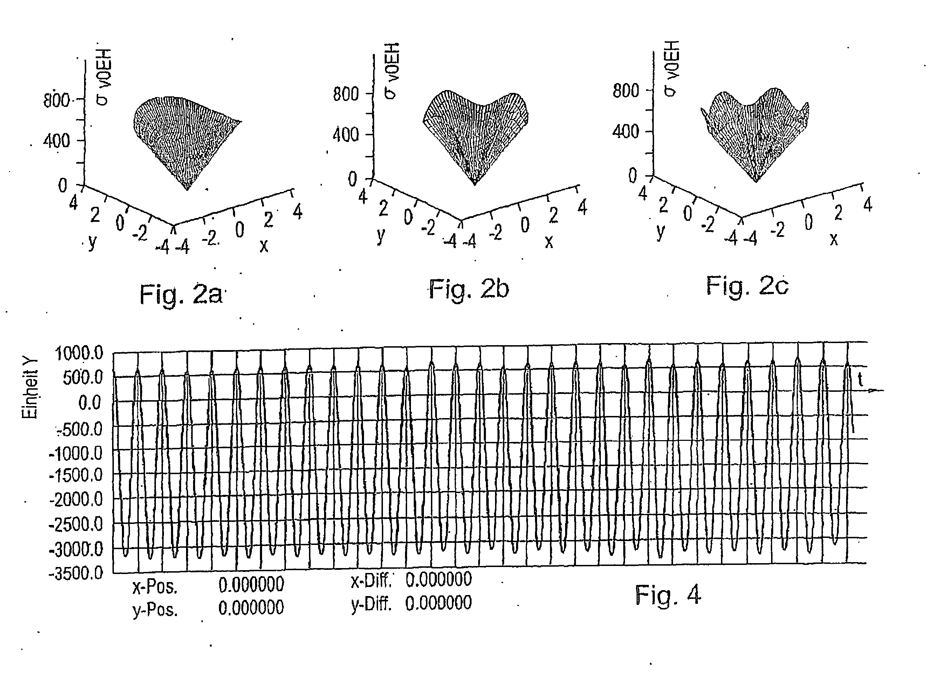

Die erfindungsgemäße Vorrichtung für kombinierte Umlaufbiege-Torsion erlaubt Probeversuche, welche mit herkömmlichen Prüfmaschinen für kombinierte Zug-Torsion nicht möglich sind. Ein Grund dafür ist, dass bei der Umlaufbiege-Torsion mehrere höchst beanspruchte Stellen im Prüfquerschnitt je nach gewähltem Frequenzverhältnis fτ/σ auftreten. Gemäß Fig. 2a beträgt das Frequenzverhältnis 1, gemäß Fig. 2b 2 und gemäß Fig. 2c 3. Bei einer kombinierten Zugtorsionsbelastung gibt es immer nur eine höchst beanspruchte Stelle. Unter kombinierter Umlaufbiegung/Torsion erhält man daher zusätzliche Informationen, welche für die Beschreibung des Ermüdungsverhaltens von Werkstoffen sehr wesentlich sind.

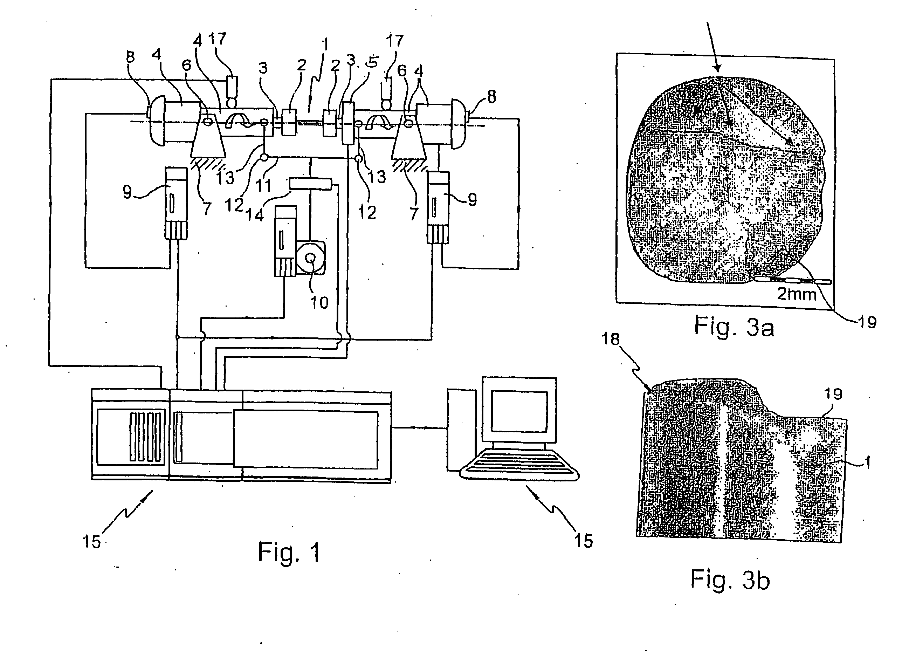

Die Fig. 3a und 3b zeigen Bruchflächen einer erfindungsgemäß geprüften Probe 1. An der Bruchfläche sind ein Primäranriss 18 und ein Sekundäranriss 19 zu erkennen,

Mit der oben beschriebenen Vorrichtung und einem zugehörigen Verfahren können somit Schwingfestigkeitsversuche an Proben 1 unter kombinierter Umlaufbiege-Torsionsbeanspruchung durchgeführt werden. Sie eignet sich insbesondere für folgende Beanspruchungsarten:
- Proportionale Beanspruchung
- Torsionsmittelmomentüberlagerung
- Veränderung des Frequenzverhältnisses f_{τ/σ}
- Konsekutive Beanspruchungen
- Einachsige Versuche unter reiner Umlaufbiegung bzw. Torsion
- Mehrstufige Versuche

Die Versuche werden an Werkstoffproben 1 durchgeführt, deren Prüfdurchmesser an das Belastungsniveau der Vorrichtung und der erwarteten Werkstofffestigkeit angepasst ist. Es können sowohl Versuche an ungekerbten wie auch an gekerbten Proben 1 durchgeführt werden.

Die Vorrichtung kann mit unterschiedlichen Prüflasten betrieben werden. Bei der Auslegung sollte auf eine genaue Abstimmung der Schwingungsverhältnisse geachtet werden. Die Vorrichtung kann zudem im Bereich der Torsionseigenfrequenz der Prüfvorrichtung betrieben werden, wodurch auch höhere Torsionsmomente realisiert werden können. Die Torsionseigenfrequenz kann durch Veränderung der Massenträgheiten beeinflusst werden, beispielsweise durch Anordnung unterschiedlicher Schwung massen.

Vorteile des erfindungsgemäßen Verfahrens und der erfindungsgemäßen Vorrichtung sind nachfolgend dargestellt:
- Es können Werkstoffproben mit sehr wirklichkeitsnahen Beanspruchungen untersucht werden. Gerade die Kombination aus Umlaufbiegung und Torsion tritt nämlich an vielen Bauteilen, wie zum Beispiel Kurbelwellen von Explosionsmotoren, auf.
- Es kann mit sehr hohen Prüffrequenzen geprüft werden, so sind beispielsweise Prüffrequenzen in der Größenordnung von 60 Hz und darüber verwirklichbar.
- Die Energiekosten sind sehr gering. Insbesondere bei elektrischer Koppelung der beiden Elektromotoren 4.
- Es besteht die Möglichkeit, die Prüfung im Resonanzbereich durchzuführen.
- Die Regelung der Vorrichtung kann in einfacher Weise entsprechend einer Prüfanforderung verwirklicht werden.

Ergänzend ist darauf hinzuweisen, dass "aufweisend" keine anderen Elemente oder Schritte ausschließt und "eine" oder "ein" keine Mehrzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zur Prüfung einer Probe (1) unter kombinierter Umlaufbiege-und Torsionsbeanspruchung, wobei das Verfahren aufweist:
- In-Rotation-Bringen der Probe (1);
- Aussetzen der Probe (1) einer Torsionsbeanspruchung durch an zwei Bereichen der Probe (1) aufgebrachte Torsionsmomente, sowie
- Aussetzen der Probe (1) einer Biegebeanspruchung;
wobei ein elektromotorisch erzeugtes Torsionsmoment auf die Probe (1) aufgebracht wird, indem die Probe (1) an einem Endbereich mittels eines ersten Elektromotors (4) mit einer vorbestimmten Drehzahl in Rotation versetzt wird und an einem anderen Endbereich an einen zweiten Elektromotor (4) gekoppelt wird und beide Elektromotoren (4) durch gegenseitiges Verdrehen ein Torsionsmoment an der Probe (1) erzeugen;
wobei die Elektromotoren (4) mit ihren Statoren jeweils um eine Schwenkachse (6) gegenüber einem Fundament (7) schwenkbeweglich gelagert sind; und
wobei die Schwenkachsen (6) sich quer zu Antriebswellen (3) der Elektromotoren (4) erstrecken und sich die Schwenkachsen (6) zueinander parallel erstrecken.

2. Verfahren nach Anspruch 1, wobei elektrische Kreisläufe der beiden Elektromotoren (4) gekoppelt sind, wobei Energie für den antreibenden Elektromotor (4) vom gerade im Bremsbetrieb befindlichen Motor geliefert wird.

3. Verfahren nach Anspruch 1 oder 2, wobei die Biegebeanspruchung der Probe (1) durch eine über den Stator jedes Elektromotors (4) erfolgende Krafteinleitung bewirkt wird.

4. Verfahren nach einem der Ansprüche 1 bis 3, wobei die Probe (1) unter kombinierter Umlaufbiege- und Torsionsbeanspruchung mit einer Frequenz oberhalb von 15 Hz einer oder beider Beanspruchungen geprüft wird.

5. Verfahren nach einem der Ansprüche 1 bis 4, wobei die Biegebeanspruchung über zwei einander gegenüberliegende Endbereiche der Probe (1)aufgebracht wird.

6. Vorrichtung zur Durchführung des Verfahrens nach einem der Ansprüche 1 bis 5, wobei die Vorrichtung aufweist:
- zwei Elektromotoren,
wobei die Elektromotoren (4) mit ihren Statoren jeweils um eine Schwenkachse (6) gegenüber einem Fundament (7) schwenkbeweglich gelagert sind; und
wobei die Elektromotoren (4) derart eingerichtet sind, dass sich die Schwenkachsen (6) quer zu Antriebswellen (3) der Elektromotoren (4) erstrecken und dass sich die Schwenkachsen (6) zueinander parallel erstrecken,
- zwei jeweils mittels eines der Elektromotoren (4) in Drehbewegung bringbare Einspanneinrichtungen (2) zum Einspannen einer Probe (1) jeweils mit einem Ende in einer der Einspannvorrichtungen (2),
wobei die Elektromotoren (4) derart eingerichtet sind, dass diese mit einander entgegengesetzten Torsionsmomenten antreibbar sind, und
- eine die Einspanneinrichtungen (2) aus einer fluchtenden Stellung abdrängende Krafteinrichtung, um die Probe (1) einer Biegebeanspruchung auszusetzen.

7. Vorrichtung nach Anspruch 6, wobei als Elektromotoren (4) Servomotoren eingesetzt sind.

8. Vorrichtung nach Anspruch 6 oder 7, wobei jeder Elektromotor (4) mit einem Drehwinkelgeber (8) ausgestattet ist und eine Drehmomentenmesseinrichtung (5) zwischen den Elektromotoren (4) vorgesehen ist, deren Messdaten einem Drehmomentenregler zuführbar sind.

9. Vorrichtung nach einem der Ansprüche 6 bis 8, wobei zur Krafteinleitung für die Biegebeanspruchung der Probe (1) ein Kraftgerät (10), insbesondere eine Hubspindel oder ein Druckmittelzylinder, mit einem Träger (11) gekoppelt ist, der beidseitig der Koppelung mit dem Kraftgerät (10) über Hebel (13) eines Hebelsystems mit jeweils einem Stator der Elektromotoren (4) gekoppelt ist.

10. Vorrichtung nach Anspruch 9, wobei die Distanz der Anlenkung der Hebel (13) des Hebelsystems am Träger (11) und/oder am Stator variabel ist.

11. Vorrichtung nach Anspruch 9 oder 10, wobei die Koppelung des Kraftgerätes (10) mit dem Träger (11) über ein elastisch nachgiebiges Element (14), vorzugsweise ausgebildet als Schraubenfeder, verwirklicht ist.

12. Vorrichtung nach einem der Ansprüche 7 bis 11, aufweisend eine Einrichtung zum Erfassens eines Wechselverformungsverhaltens der Probe (1).

## Claims

1. Method of examining a sample body (1) by combined rotational bending and torsion loading, the method comprising:
- causing the sample body (1) to rotate;
- exposing the sample body (1) to a torsion load by applying torsional moments to two regions of the sample body (1), and
- exposing the sample body (1) to a bending load;
wherein an electromotively generated torsional moment is applied to the sample body (1) by causing an end portion of the sample body (1) to rotate with a predetermined rotational speed by means of a first electric motor (4) and coupling another end portion of the sample body (1) to a second electric motor (4) and by generating a torsional moment at the sample body (1) by mutually twisting both electric motors (4);
wherein the electric motors (4) with their respective stators are pivotally supported around a respective pivot axis (6) opposite to a foundation (7); and
wherein the pivot axes (6) extend perpendicularly to the drive shafts (3) of the electric motors (4), and the pivot axes (6) extend in parallel relative to each other.

2. The method according to claim 1, wherein electrical circuits of both electric motors (4) are coupled, whereby power for the driving electric motor (4) is supplied by the motor which is currently operating in brake mode.

3. The method according to claim 1 or 2, wherein the bending load of the sample body (1) is caused by a transmission of force which is effected by the stator of each electric motor (4).

4. The method according to one of claims 1 to 3, wherein the sample body (1) is examined by combined rotational bending and torsion loading with a frequency above 15 Hz with regard to one or both of the loadings.

5. The method according to one of claims 1 to 4, wherein the bending loading is applied through two opposing end portions of the sample body (1).

6. Apparatus for performing the method according to one of claims 1 to 5, wherein the apparatus comprises:
- two electric motors,
wherein the electric motors (4) with their respective stators are pivotally supported around a respective pivot axis (6) opposite to a foundation (7); and
wherein the electric motors (4) are arranged such that the pivot axes (6) extend perpendicularly to the drive shafts (3) of the electric motors (4) and the pivot axes (6) extend in parallel relative to each other ,
- two mounting devices (2) for mounting a sample body (1) such that the sample body (1) has one end in each of the mounting devices (2), each mounting device (2) being rotatable by a respective one of the electric motors (4),
wherein the electric motors (4) are arranged such that they are drivable by oppositely directed torsional moments, and
a force device which pushes the mounting devices (2) away from an aligned position in order to expose the sample body (1) to a bending load.

7. The device according to claim 6, wherein servomotors are employed as the electric motors (4).

8. The device according to claim 6 or 7, wherein each electric motor (4) is provided with a rotation angle sensor (8) and a torsional moment measurement device (5) is provided between the electric motors (4), wherein the measurement data of the torsional moment measurement device (5) is feedable to a torsional moment controller.

9. The device according to one of claims 6 to 8, wherein a force unit (10), in particular a lifting spindle or a pneumatic actuator, is coupled to a carrier (11) in order to transmit the force for exposing the sample body (1) to the bending load, wherein the carrier (11) is coupled to a respective stator of the electric motors (4) on both sides of the coupling with the force unit (10) via respective levers (13) of a lever system.

10. The device according to claim 9, wherein the distance of the coupling of the lever (13) of the lever system to the carrier (11) and/or to the stator is variable.

11. The device according to claim 9 or 10, wherein the coupling of the force unit (10) with the carrier (11) is realized by an elastic resilient element (14) which is preferably formed as a helical spring.

12. The device according to one of claims 7 to 11, comprising a device for detecting a changing deformation behavior of the probe body (1).

## Revendications

1. Procédé servant à tester une éprouvette (1) soumise à un effort de flexion rotative et de torsion combiné, sachant que le procédé présente les étapes suivantes consistant à :
- amener en rotation l'éprouvette (1) ;
- soumettre l'éprouvette (1) à un effort de torsion par des moments de torsion appliqués à deux zones de l'éprouvette (1), ainsi que
- soumettre l'éprouvette (1) à un effort de flexion ;
sachant qu'un moment de torsion généré de manière électromotrice est appliqué sur l'éprouvette (1), tandis que l'éprouvette (1) est amenée en rotation à un nombre de tours prédéfini au moyen d'un premier électromoteur (4) au niveau d'une zone d'extrémité et est couplée au niveau d'une autre zone d'extrémité à un deuxième électromoteur (4) et que les deux électromoteurs (4) génèrent par torsion mutuelle un moment de torsion sur l'éprouvette (1) ;
sachant que les électromoteurs (4) sont logés par leurs stators de manière à pouvoir être déplacés par pivotement respectivement autour d'un axe de pivotement (6) par rapport à une base (7) ; et
sachant que les axes de pivotement (6) s'étendent de manière transversale par rapport aux arbres d'entraînement (3) des électromoteurs (4) et que les axes de pivotement (6) s'étendent de manière parallèle les uns par rapport aux autres.

2. Procédé selon la revendication 1, sachant que les circuits électriques des deux électromoteurs (4) sont couplés, sachant que l'énergie pour l'électromoteur (4) de commande est fournie par le moteur se trouvant précisément en mode de freinage.

3. Procédé selon la revendication 1 ou 2, sachant que l'effort de flexion de l'éprouvette (1) est provoqué par l'introduction d'une force se produisant par l'intermédiaire du stator de chaque électromoteur (4).

4. Procédé selon l'une quelconque des revendications 1 à 3, sachant que l'éprouvette (1) soumise à l'effort de flexion rotative et de torsion combiné est testée à une fréquence supérieure à 15 Hz de l'un ou des deux efforts.

5. Procédé selon l'une quelconque des revendications 1 à 4, sachant que l'effort de flexion est appliqué par l'intermédiaire de deux zones d'extrémité de l'éprouvette (1) se faisant face.

6. Dispositif servant à mettre en oeuvre le procédé selon l'une quelconque des revendications 1 à 5, sachant que le dispositif présente :
- deux électromoteurs,
sachant que les électromoteurs (4) sont logés par leurs stators de manière à pouvoir être déplacés par pivotement respectivement autour d'un axe de pivotement (6) par rapport à une base (7) ; et
sachant que les électromoteurs (4) sont installés de telle manière que les axes de pivotement (6) s'étendent de manière transversale par rapport aux arbres d'entraînement (3) des électromoteurs (4) et que les axes de pivotement (6) s'étendent de manière parallèle les uns par rapport aux autres,
- deux dispositifs de serrage (2) pouvant être amenés en déplacement rotatif respectivement au moyen d'un des électromoteurs (4) et servant à serrer une éprouvette (1) respectivement par une extrémité dans l'un des dispositifs de serrage (2),
sachant que les électromoteurs (4) sont installés de telle manière que ces derniers peuvent être entraînés avec des moments de torsion opposés, et
- un appareil de force poussant les dispositifs de serrage (2) hors d'une position alignée afin de soumettre l'éprouvette (1) à un effort de flexion.

7. Dispositif selon la revendication 6, sachant qu'on utilise comme électromoteurs (4) des servomoteurs.

8. Dispositif selon la revendication 6 ou 7, sachant que chaque électromoteur (4) est équipé d'un appareil transmetteur d'écart angulaire (8) et qu'un appareil de mesure des couples de rotation (5) est prévu entre les électromoteurs (4) dont les données de mesure peuvent être apportés à un régulateur de couples de rotation.

9. Dispositif selon l'une quelconque des revendications 6 à 8, sachant qu'un appareil de force (10), en particulier un vérin ou un cylindre de pression, est couplé à un support (11) pour introduire une force pour l'effort de torsion de l'éprouvette (1), lequel support est couplé des deux côtés du couplage à l'appareil de force (10) par l'intermédiaire de leviers (13) d'un système à levier à respectivement un stator des électromoteurs (4).

10. Dispositif selon la revendication 9, sachant que la distance de l'articulation des leviers (13) du système à levier sur le support (11) et/ou sur le stator est variable.

11. Dispositif selon la revendication 9 ou 10, sachant que le couplage de l'appareil de force (10) au support (11) est effectué par l'intermédiaire d'un élément élastique souple (14), de préférence réalisé comme un ressort à boudin.

12. Dispositif selon l'une quelconque des revendications 7 à 11, présentant un appareil servant à détecter un comportement de déformation alternée de l'éprouvette (1).
